# FASCICULE DE BREVET EUROPEEN

(11) **EP 0 728 623 B1**
(45) Date de publication et mention de la délivrance du brevet: **17.05.2000**
(21) Numéro de dépôt: 96400200.0
(22) Date de dépôt: 26.01.1996
(51) Int. Cl.: B60R 16/02

(54) **Procédé de gestion de la transmission de messages sur un réseau de transmission d'un système électronique embarqué à bord d'un véhicule automobile**
Verfahren zur Steuerung der Übertragung von Nachrichten im Übertragungsnetzwerk eines elektronischen Bordsystems eines Automobils
Method for controlling the transmission of messages on a transmission network in an automobile's on-board electronic system

(30) Priorité: 21.02.1995 FR 9501997
(43) Date de publication de la demande: 28.08.1996
(73) Titulaire: AUTOMOBILES PEUGEOT, 75116 Paris (FR); AUTOMOBILES CITROEN, 92200 Neuilly-sur-Seine (FR)
(72) Inventeur: Bensaid, Franck, F-94000 Creteil (FR); Kaag, François, F-95570 Bouffemont (FR)
(74) Mandataire: Habasque, Etienne Joel Jean-François

(56) Documents cités:
- EP-A- 0 580 083
- IEEE TRANSACTIONS ON VEHICULAR TECHNOLOGY, vol. 38, no. 3, Août 1989, NEW YORK, NY, US, pages 140-147, XP000101474 ABUL MASRUR: "Digital Simulation of an Automotive Multiplexing Wiring System"
- IEICE TRANSACTIONS ON ELECTRONICS, vol. E76-C, no. 12, Décembre 1993, TOKYO, JP, pages 1767-1773, XP000426738 T. KIMURA ET AL: "An In-Vehicle Communications LSI Set for Automotive Electronic Control Systems"

## Description

La présente invention concerne un procédé de gestion de la transmission de messages cycliques et sporadiques sur un réseau multiplexé de type maître-esclaves de transmission d'informations entre stations d'un système électronique embarqué à bord d'un véhicule automobile comme défini par le préambule de la revendication 1.

Les véhicules automobiles ont connu ces dernières années, une explosion du nombre des fonctions embarquées à bord de ceux-ci.

Ces différentes fonctions remplies la plupart du temps par des organes électriques ou électroniques posent un certain nombre de problèmes de raccordement.

En effet, le souci principal engendré par ces organes est l'accroissement du nombre de fils de raccordement de ceux-ci, ce qui augmente d'autant le nombre d'interconnexions et la masse des véhicules, en posant des problèmes de fiabilité et de consommation.

On a déjà proposé dans l'état de la technique, pour résoudre ces problèmes tout en assurant les prestations demandées, la solution du multiplexage des messages.

Ce multiplexage utilise un réseau de transmission d'informations entre les différents organes embarqués à bord du véhicule et de façon plus générale entre les différentes stations du système électronique embarqué à bord de celui-ci, ce réseau permettant par exemple de transmettre des données et d'interroger des capteurs ou de commander des actionneurs au moyen d'un support de communication partagé.

Cette solution qui diminue le nombre de fils de raccordement, permet de réduire le nombre d'interconnexions et la masse des véhicules.

Par contre, la communication d'informations au travers d'un réseau de type maître-esclaves, fréquemment utilisé dans le domaine de l'industrie automobile, pose des problèmes de répartition des messages sur celui-ci, c'est à dire d'allocation de ce réseau.

On connaît déjà dans l'état de la technique, des procédés de gestion de la transmission de ces messages par exemple dans des réseaux maître-esclaves, qui peuvent être classés en deux catégories principales, à savoir:
1) le procédé cyclique ou tout déterministe, et
2) le procédé asynchrone ou tout sporadique.

La première solution propose une allocation totalement déterministe du réseau et permet d'obtenir une charge de réseau constante, mais cette charge est imposée par les temps de réponse requis des messages et non par la fréquence des changements d'état, par exemple des stations.

La seconde solution, qui propose une allocation totalement sporadique du réseau, procure une efficacité maximale dans les réactions aux changements d'état, mais apporte peu de robustesse dans la gestion des défaillances matérielles.

EP-A-0 580 083 décrit un réseau de transmission d'informations dont les données sont transmises en créneaux successifs, chaque créneau comprenant un module isochrone et un module asynchrone d'une longueur adaptable.

Le but de l'invention est donc de résoudre ces problèmes.

A cet effet, l'invention a pour objet un procédé de gestion de la transmission de messages cycliques et sporadiques sur un réseau multiplexé de type maître-esclaves de transmission d'informations entre stations d'un système électronique embarqué à bord d'un véhicule automobile, dans lequel les messages cycliques sont classés par catégories en fonction de leur période d'émission sur le réseau, des messages ayant une période d'émission de base et d'autres messages ayant des périodes d'émission correspondant à des périodes multiples de la période de base, caractérisé en ce qu'on délimite dans le temps, des tranches successives de transmission des messages sur le réseau, présentant une période correspondant à la période de base et on délimite dans chaque tranche, deux créneaux temporels successifs, le premier, de transmission des messages cycliques des différentes catégories en totalité ou en partie en fonction de leur période d'émission et de la durée du créneau et le second, de transmission des messages sporadiques.

L'invention sera mieux comprise à la lecture de la description qui va suivre, donnée uniquement à titre d'exemple et faite en se référant aux dessins annexés, sur lesquels :
- la Fig.1 représente un schéma synoptique illustrant la structure d'un réseau multiplexé de type maître-esclaves de transmission d'informations entre stations d'un système électronique embarqué à bord d'un véhicule automobile; et
- la Fig.2 illustre le fonctionnement d'un procédé de gestion selon l'invention.

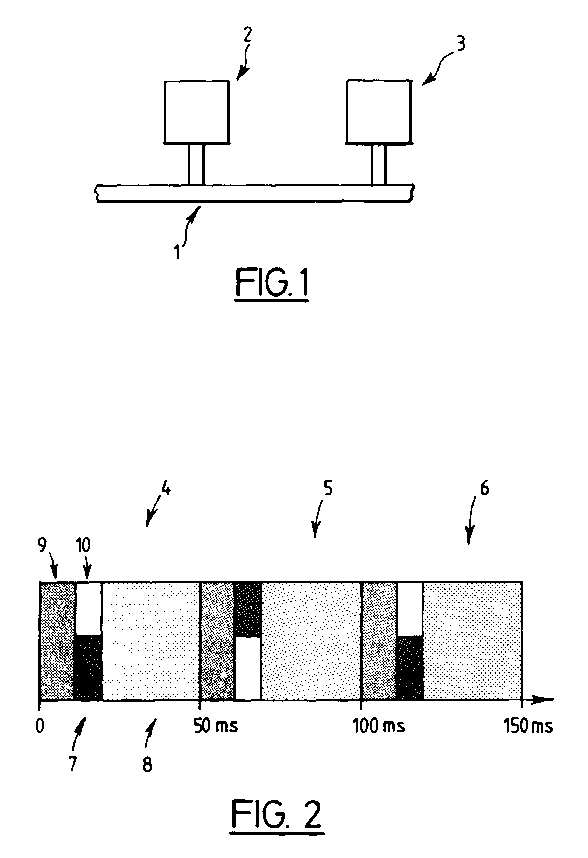

On a représenté sur la figure 1 et sous forme schématique, un système électronique embarqué à bord d'un véhicule automobile qui comporte un réseau multiplexé de transmission d'informations, désigné par la référence générale 1, permettant l'échange d'informations entre stations, par exemple 2 et 3, raccordées à ce réseau.

Ce réseau est du type maître-esclaves et les messages d'informations transmis sur ce réseau, peuvent être des messages cycliques ou sporadiques.

Les messages cycliques sont des messages qui présentent une période d'émission déterminée sur le réseau, tandis que les messages sporadiques sont consécutifs par exemple à des changements d'état des stations, à des rafraîchissements de celles-ci ou encore à des messages de service.

Le principe d'allocation du réseau suivant le procédé de gestion selon la présente demande est basé sur la notion de partage du réseau en plages cycliques et en plages sporadiques.

A cet effet, les messages cycliques sont triés en fonction de leur période d'émission sur le réseau, ce qui permet de définir un schéma déterministe d'occupation de celui-ci, tandis qu'une fois que cette occupation systématique du réseau est définie, les plages libres restantes sont utilisées pour l'émission des messages sporadiques.

A cet effet, les messages cycliques sont classés par catégories en fonction de leur période d'émission sur le réseau, des messages ayant une période d'émission de base et d'autres messages ayant des périodes d'émission correspondant à des périodes multiples de la période de base.

On délimite alors dans le temps, des tranches successives de transmission des messages sur le réseau, présentant une période correspondant à la période de base.

On délimite ensuite dans chaque tranche, deux créneaux temporels successifs, le premier de transmission des messages cycliques et le second de transmission des messages sporadiques et on délimite enfin dans le premier créneau, des plages successives de transmission des messages cycliques des différentes catégories en totalité ou en partie en fonction de leur période d'émission et de la durée du créneau.

Un tel procédé d'allocation de réseau est illustré sur la figure 2.

On conçoit en effet à la lumière de cette figure, qu'on délimite dans le temps, des tranches successives de transmission de messages sur le réseau, ces tranches présentant une période correspondant à la période de base des messages cycliques et étant désignées par les références générales 4,5 et 6 par exemple sur cette figure 2.

On délimite ensuite dans chaque tranche, et par exemple dans la tranche 4, deux créneaux temporels successifs 7 et 8, le premier 7 permettant la transmission des messages cycliques et le second 8 permettant la transmission des messages sporadiques.

Enfin, on délimite dans le premier créneau 7, des plages successives, par exemple 9 et 10, de transmission des messages cycliques des différentes catégories en fonction de leur période d'émission.

L'exemple qui est donné sur cette figure est l'exemple d'un tri des messages cycliques ayant conduit à la constitution de deux catégories ou classes de messages A et B dont les périodes d'émission sont respectivement 50 et 100 ms.

La plage 9 permet la transmission des messages cadencés à 50 ms, c'est à dire de classe A, tandis que la plage 10 permet la transmission d'une partie et par exemple de la moitié, des messages cadencés à 100 ms, c'est à dire de classe B, la seconde partie, c'est à dire par exemple l'autre moitié de ces messages, étant transmise dans la plage correspondante du premier créneau temporel de la tranche suivante 5.

Suivant ce principe, on obtient dans le cas de l'exemple traité, un schéma d'allocation du réseau garantissant la périodicité des messages de classe A cadencés à 50 ms et de classe B cadencés à 100 ms, tout en disposant de plages libres pour la transmission des messages sporadiques, c'est à dire non-périodiques.

Cependant, ce principe d'allocation du réseau implique certaines règles de dimensionnement.

En effet, en fonction de la messagerie, il faut vérifier que la période de base choisie permet l'écoulement des messages périodiques et d'être en mesure lors de phases critiques, d'écouler les messages sporadiques selon les critères choisis, par exemple pour supporter une rafale d'évènements entraînant l'émission de tous les messages sporadiques.

Le dimensionnement s'effectue alors en cinq phases, à savoir :
1) choix de la période de base,
2) choix des différentes classes de messages cycliques, une classe prenant une valeur multiple de la valeur de base,
3) répartition des messages cycliques en fonction de leur période,
4) calcul des plages libres, et
5) contrôle des phases critiques.

Pour illustrer les points précédents, on peut prendre l'exemple selon lequel la période de base PB est de 50 ms et quatre classes de messages cycliques A,B,C,D sont définies telles que :
- Classe A : Période 50 ms
- Classe B : Période 100 ms
- Classe C : Période 200 ms
- Classe D : Période 1000 ms

Il faut donc 20 périodes de base pour écouler tous les messages cycliques.

Si l'on considère les notations suivantes :
- nA =: nombre d'IT^{(*)} utilisés par les messages de la classe A,
- nB =: nombre d'IT utilisés par les messages de la classe B,
- nC =: nombre d'IT utilisés par les messages de la classe C,
- nD =: nombre d'IT utilisés par les messages de la classe D,

(*) IT : Intervalle de Temps - On exprime la durée d'un message en nombre d'IT.

On aura en moyenne M Intervalles de Temps par créneau déterministe, où M est obtenu par la relation suivante :
M=(20*nA+10*nB+5*nC+nD)/20 arrondi à la valeur supérieure.

Avant d'ajouter un nouveau message dans un créneau déterministe, il faut vérifier que sa durée ajoutée au temps déjà utilisé ne dépasse pas M.

La période de la classe A de messages cycliques étant égale à la période de base, à chaque période, on émet tous les messages de cette classe, ce qui correspond donc à nA Intervalles de Temps. Dans le créneau correspondant, on utilise alors les M-nA Intervalles de Temps restants pour émettre le plus grand nombre de messages de la classe B. Deux cas peuvent alors se présenter :
1) Tous les messages de classe B peuvent être émis dans les M-nA Intervalles de Temps restants.
2) On ne peut émettre qu'une partie des messages de la classe B.

Dans le premier cas, on peut commencer à effectuer le même raisonnement avec les messages de classe C, et les prochains messages de classe B seront émis deux périodes de base plus tard.

Dans le second cas, le reste des messages de classe B sera émis lors de la prochaine période, et les messages de classe C seront émis dès que le dernier message de classe B aura été émis.

On peut appliquer ce raisonnement aux messages de la classe D qui seront émis dès que l'émission de ceux de la classe C sera terminée.

Ce raisonnement permet donc d'établir un calendrier-des messages périodiques.

La gestion des phases critiques se fait de la façon suivante.

La durée d'un créneau libre de transmission des messages sporadiques est de PL = PB - M. C'est dans ce créneau que pourront être émis les messages de rafraîchissement par exemple. A partir de cette durée, il est nécessaire de vérifier que le dimensionnement retenu permet de remplir les conditions choisies pour la réponse aux phases critiques. Si on souhaite être en mesure de supporter une rafale d'événements engendrant l'émission de tous les messages sporadiques, il faut calculer le temps d'écoulement de ces messages.

Le calcul de ce temps s'effectue après avoir trié les messages cycliques en fonction des temps de réponse souhaités. A partir de ce tri, on calcule en fonction des spécificités de chaque classe de messages, le temps nécessaire à l'écoulement de ceux-ci.

Si l'on considère que le tri a permis de former n classes C1 à Cn constituées de messages ayant la même période, avec Ti désignant la durée cumulée des messages de la classe Ci, on obtient :
* DREᵢ = DREᵢ₋₁ + Tᵢ où DREᵢ désigne la Durée Relative d'Ecoulement des messages de la classe Cᵢ.
* NB_{_}PLᵢ = E(DREᵢ/PL) où NB_{_}PLᵢ désigne le nombre de créneaux nécessaires à l'écoulement de la classe Cᵢ.
* TREᵢ = PB^{∗}NB₋PLᵢ + DREᵢ - NB₋PLᵢ^{∗}PL où TREᵢ désigne le Temps Réel d'Ecoulement nécessaire à tous les messages de la classe Cᵢ.

Chaque classe étant caractérisée par le temps de réponse, c'est l'information TRE qui permet de contrôler si le temps d'écoulement de tous les messages d'une classe est inférieur au temps de réponse imposé aux messages de cette classe.

On conçoit alors que ce procédé permet en effectuant une classification au sein de la messagerie, de remplir les conditions de périodicité de certains messages tout en assurant un temps de réaction rapide et borné pour les messages sporadiques.

Cette allocation de réseau est gérée par les gestionnaires de protocole intégrés dans les systèmes électroniques des véhicules et peut s'appliquer à tous les réseaux de type maître-esclaves et plus particulièrement aux réseaux de transmission des informations au sein des véhicules automobiles, comme par exemple les réseaux de multiplexage de carrosserie, les réseaux de multiplexage de confort, etc...

Du fait de l'augmentation croissante du nombre de fonctions embarquées à bord des véhicules automobiles, la solution du multiplexage local ou élargi sera de plus en plus utilisée et l'allocation définie précédemment permet de résoudre les différents problèmes d'occupation du réseau, de façon simple et fiable.

## Revendications

1. Procédé de gestion de la transmission de messages cycliques et sporadiques sur un réseau multiplexé de type maître-esclaves (1) de transmission d'informations entre stations (2,3) d'un système électronique embarqué à bord d'un véhicule automobile, dans lequel les messages cycliques sont classés par catégories en fonction de leur période d'émission sur le réseau, des messages ayant une période d'émission de base et d'autres messages ayant des périodes d'émission correspondant à des périodes multiples de la période de base, caractérisé en ce qu'on délimite dans le temps, des tranches successives (4,5,6) de transmission des messages sur le réseau, présentant une période correspondant à la période de base et on délimite dans chaque tranche (4,5,6), deux créneaux temporels successifs (7,8), le premier (7), de transmission des messages cycliques des différentes catégories en totalité ou en partie en fonction de leur période d'émission et de la durée du créneau et le second (8), de transmission des messages sporadiques.

2. Procédé selon la revendication 1, caractérisé en ce qu'on délimite dans le premier créneau, des plages successives (9,10) de transmission des messages cycliques en fonction de leur période d'émission.

## Patentansprüche

1. Verfahren für die Steuerung der Übertragung von zyklischen und sporadischen Nachrichten auf einem Übertragungsnetzwerk vom Typ Hauptfunktion-Nebenfunktion (1) für die Übertragung von Nachrichten zwischen Stationen (2, 3) eines elektronischen Systems, das an Bord eines Kraftfahrzeuges mitgeführt wird, in dem die zyklischen Nachrichten je nach dem Zeitintervall ihrer Aussendung auf dem Netz in verschiedene Kategorien eingestuft werden, das heißt, in Nachrichten, welche einen bestimmten Basiszeitintervall für die Aussendung haben, und in andere Nachrichten, welche Zeitintervalle für die Aussendung haben, die multiplen Zeitintervallen des Basiszeitintervalls entsprechen,
**dadurch gekennzeichnet, daß**
sukzessive Abschnitte (4, 5, 6) für die Übertragung auf dem Netz, welche einen Zeitintervall haben, der dem Basiszeitintervall entspricht, zeitlich begrenzt werden, und daß in jedem Abschnitt (4, 5, 6) zwei sukzessive Auftastimpulse (7, 8) bestimmt werden, von denen der erste Auftastimpuls (7) der kompletten oder teilweisen Übertragung von zyklischen Nachrichten der verschiedenen Kategorien je nach dem Zeitintervall ihrer Aussendung und der Dauer des Auftastimpulses entspricht, und der zweite Auftastimpuls (8) der Übertragung von sporadischen Nachrichten entspricht.

2. Verfahren nach Anspruch 1,
**dadurch gekennzeichnet, daß**
in dem ersten Auftastimpuls sukzessive Bereiche (9, 10) für die Übertragung von zyklischen Nachrichten je nach dem Zeitintervall ihrer Aussendung festgelegt werden.

## Claims

1. A method of controlling the transmission of recurring and sporadic messages on a multiplex network of the master-slave type (1) for transmitting information between positions (2, 3) in an automobile on-board electronic system, in which the recurring messages are classified into categories as a function of their emission period on the network, some of the messages having a base emission period and the other messages having emission periods corresponding to multiples of the base period, characterised in that there are defined in time successive blocks (4, 5, 6) of transmission of the messages on the network, having a period corresponding to the base period and defined in each block (4, 5, 6) two successive time intervals (7, 8) the first (7) for transmission of the recurring messages in the different categories as a whole or in part as a function of their emission period and the duration of the interval and the second (8) for transmission of the sporadic messages.

2. A method according to claim 1, characterised in that in the first interval, there are defined successive bands (9, 10) for transmission of the recurring messages as function of their emission period.
